# EUROPEAN PATENT SPECIFICATION

(11) **EP 2 751 942 B1**
(45) Date of publication and mention of the grant of the patent: **08.08.2018**
(21) Application number: 12758964.6
(22) Date of filing: 04.09.2012
(51) Int. Cl.: H04J 14/04, H04J 14/02, G02B 6/26

(54) **METHOD AND APPARATUS FOR SPACE-DIVISION MULTIPLEXING SYSTEMS**
VERFAHREN UND VORRICHTUNG FÜR MULTIPLEXSYSTEME MIT RAUMTEILUNG
PROCÉDÉ ET APPAREIL POUR SYSTÈMES DE MULTIPLEXAGE SPATIAL

(30) Priority: 02.09.2011 US 201161530929 P
(43) Date of publication of application: 09.07.2014
(73) Proprietor: Alcatel Lucent, 91620 Nozay (FR)
(72) Inventor: SETHUMADHAVAN, Chandrasekhar, Matawan, NJ 07747 (US); LIU, Xiang, Marlboro, NJ 07746 (US); WINZER, Peter, J., Aberdeen, NJ 07747 (US); GNAUCK, Alan, H., Middletown, NJ 07748 (US)
(74) Representative: Wetzel, Emmanuelle
(86) International application number: PCT/US2012/053663
(87) International publication number: WO 2013/033703

(56) References cited:
- EP-A2- 1 396 742
- US-A- 5 651 080
- US-A1- 2010 329 670
- US-A1- 2012 224 807
- AL AMIN A ET AL: "Spatial mode division multiplexing for overcoming capacity barrier of optical fibers", OPTOEELECTRONICS AND COMMUNICATIONS CONFERENCE (OECC), 2011 16TH, IEEE, 4 July 2011 (2011-07-04), pages 415-416, XP032051159, ISBN: 978-1-61284-288-2

## Description

### CROSS-REFERENCE TO RELATED APPLICATIONS

This application claims priority from U.S. Provisional Patent Application No. 61/530,929, filed on September 2, 2011, entitled "Method and Apparatus for Space-Division Multiplexing Systems.

### BACKGROUND

### Field

The invention relates to optical communication equipment and, more specifically but not exclusively, to transmission of optical communication signals in space-division multiplexing (SDM) systems using multi-core fiber (MCF), multi-mode fiber (MMF), few-mode fiber (FMF), or ribbon cable made of nominally uncoupled single-mode fiber (SMF) as the transmission media.

### Description of the Related Art

This section introduces aspects that may help facilitate a better understanding of the invention(s) described herein. Accordingly, the statements of this section are to be read in this light and are not to be understood as admissions about what is in the prior art or what is not in the prior art.

Performance variations among signals traveling through transmission media impair the transmission performance of systems, including for example the transmisison performance of space-division multiplexing (SDM) systems. Thus, one technical problem related to such tranmission systems is how to increase the transmission performance of SDM systems using multi-core fiber (MCF), multi-mode fiber (MMF), few-mode fiber (FMF), or ribbon cable made of nominally uncoupled single-mode fiber (SMF) as the transmission media. In particular, the performance variations among the signals traveling through the multiple cores of a MCF, or multiple modes of a MMF, or multiple fibers of a ribbon cable need to be minimized in order to improve transmission performance.

One existing solution to address transmission performance of such tranmission systems is to increase the uniformity of the transmission charateristics of the MCF, such as loss, dispersion, and crosstalk, through better and improved fiber design and manufacturing. However, this approach has limited performance benefits and becomes increasingly expensive as the uniformity requirement is increased. Further, for MMF, higher-order modes generally have higher loss than the fundamental mode, and it is difficult to make the losses of different modes equal. EP1396742 discloses dispersion compensators that are adjustable based on selection of mode propagation properties of two or more modes. The fundamental device structure comprises two or more sections of optical fiber that support the fundamental mode as well as well as one or more higher-order-modes (HOM). The HOM fibers are connected to each other by means of a spatial mode-converter (MC) that is switchable. The MC may be fabricated with, for example, long-period fiber-gratings (LPG), coupled waveguide devices, free-space phase-retardation elements, micro-electro-mechanical devices, or acousto-optic couplers. The MC is assembled such that it transforms any incoming spatial mode into one of any other guided modes in the HOM fiber. Switching is achieved by strain, temperature, the electro-optic or nonlinear optic effect, or any other physical effect that changes the refractive index of the optical material used to construct the MC. US 5,651,080 discloses an optical exchanging apparatus including N optical transmitters for generating optical signals each having a single constant mode, N mode converters for converting modes of the optical signals generated from the optical transmitters according to a mode-converting signal, an Nxl coupler for coupling the mode-converted optical signals generated from the mode converters to be supplied to one terminal, a 1xN distributor or distributing the coupled optical signal generated from the Nxl coupler to N optical signals each having various modes, N mode selectors for respectively passing only the optical signal of a selected mode out of the N optical signals generated from the 1xN distributor, and N optical receivers for receiving the optical signals generated from the mode selectors. US 2010/0329670 discloses an optical transmission system comprising multi-core fibres and mode scramblers to ensure that all signals in the different cores are subject to substantially the same amount of amplification.

### SUMMARY

According to one embodiment of a MCF-based transmission system, the optical signals traveling through each of the cores of a MCF span are moved to another core in the next MCF span. This core-to-core signal rotation may be continued at multiple locations along a MCF transmission link. The locations where the core-to-core rotation is applied can be (1) optical add/drop multiplexer (OADM) sites, (2) optical amplifier sites, or (3) the combination of (1) and (2). By doing the core-to-core rotation, the uniformity in loss, dispersion, and signal arrival time can be much improved, thereby increasing the overall system performance. As it is likely that one or more cores or modes will have increased crosstalk relative to the others, embodiments of the described technique can help reduce the performance variation of spatially multiplexed signals by distributing the crosstalk penalty among all of the spatially multiplexed signals. In addition, the system degradation resulting from some optical component defects, such as the loss ripple and polarization-dependent loss (PDL) in OADMs and optical amplifiers, can be reduced through the "averaging" effect of the core-to-core rotation.

For MMF, different modes generally have different transmission characteristics. For future-generation tightly-packed ribbon cable, it is likely that different strands have different properties, depending on where the individual strand is located within the ribbon in the cable cross-section. Accordingly, the base idea of core-to-core rotation described above can be straightforwardly extended to MMF-based and fiber-ribbon-based transmission systems by using mode-to-mode signal rotation and fiber-to-fiber rotation, respectively, rather than the core-to-core rotation used in the MCF case. Note that these three variants of rotation can be used together in systems where MCF, MMF, and fiber ribbon are used in combination.

### BRIEF DESCRIPTION OF THE DRAWINGS

Example embodiments will be more clearly understood from the following detailed description taken in conjunction with the accompanying drawings. The Figures represent non-limiting, example embodiments as described herein.
FIG. 1 shows a block diagram of a first embodiment of a space division multiplexed (SDM) transmission system according to an embodiment of the invention; and
FIG. 2 shows a block diagram of a second embodiment of a space division multiplexed (SDM) transmission system according to an embodiment of the invention.

### DETAILED DESCRIPTION

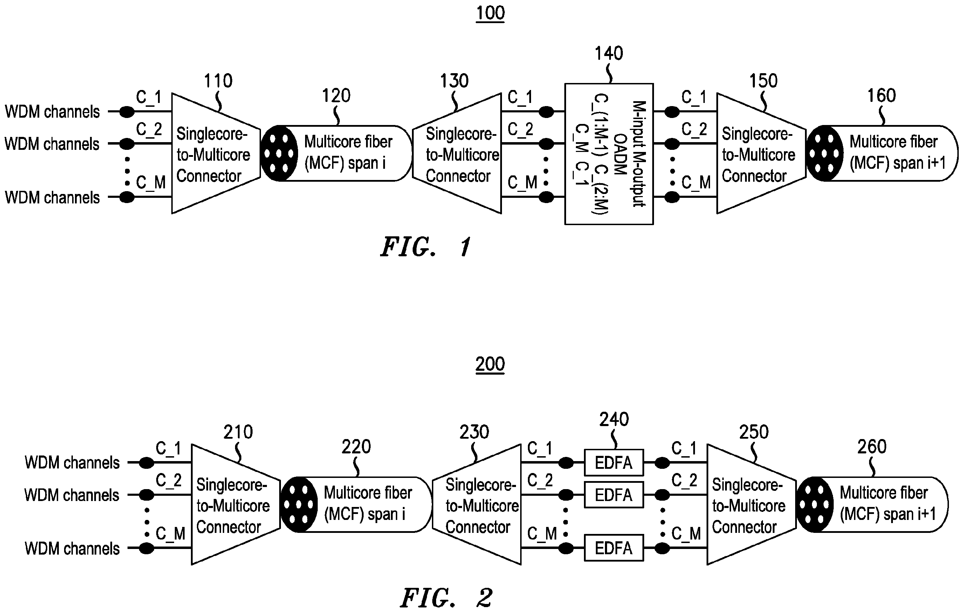

FIG. 1 shows a block diagram of a first embodiment of a space division multiplexed (SDM) transmission system according to an embodiment of the invention. FIG. 1 illustrates a first embodiment for core-to-core signal rotation in multi-core fiber (MCF) transmission for a SDM transmission system **100.** The optical signals traveling through a MCF span are rearranged such that they travel through the next MCF span on different cores of the MCF. As shown, wavelength-division multiplexed (WDM) channels (C_1, C_2, ... C_M) may be provided to a singlecore-to-multicore-connector **110** for connection to a first MCF span **120.** (A fiber span may also be called a fiber segment.) The channels are provided to the first MFC span with a first spatial assignment. Naturally, the optical signal or channels need not utilize wavelength-division multiplexing.

The MCF span **120** is traversed by the optical signals and provided to a singlecore-to-multicore-connector **130.** At this point, the spatial assignment remains unchanged. The singlecore-to-multicore-connector **130** provides the WDM channels to Optical Add Drop Multiplexer (OADM) **140.** Rearrangement of the spatial assignment of the WDM channels can be easily performed in an M-input M-output OADM by connecting the output ports of the OADM to the input ports of the next singlecore-to-multicore connector **150** with a cyclic core index shift, M being an integer. For example, C_(1:M-1) -> C_(2:M) ; C_(M) -> C_1. That is; the spatial assignment for the first to the M-1th channel of a first fiber segment is switched to the next higher channel in the next fiber segment, and spatial assignment of the M-th channel in the first fiber segment is shifted to the first channel in the next fiber channel. In another embodiment, the spatial assignment may change according to a predetermined pattern. The MxM OADM can be in the form of an MxM wavelength selective switch. The OADM may also be a Reconfigurable OADM, nominally a ROADM.

FIG. 2 shows a block diagram of a second embodiment of a space division multiplexed (SDM) transmission system according to an embodiment of the invention. Figure 2 illustrates a second embodiment in which the core-to-core signal rotation is realized by suitably arranging the connections between the outputs of optical amplifiers and the input ports of the singlecore-to-multicore connector.

In the illustrated SDM transmission system **200**, optical signals traveling through a MCF span are rearranged such that they travel through the next MCF span on different cores of the MCF. As shown, wavelength-division multiplexed (WDM) channels (C_1, C_2, ... C_M) may be provided to a singlecore-to-multicore-connector **110** for connection to a first MCF segment **220.** The channels are provided to the first MFC span with a first spatial assignment. Naturally, the optical signal or channels need not utilize wavelength-division multiplexing.

The MCF span **220** is traversed by the optical signals and provided to a singlecore-to-multicore-connector **230.** At this point, the spatial assignment remains unchanged. The singlecore-to-multicore-connector **230** provides the WDM channels to a plurality of fiber amplifiers **240.** In one embodiment, the fiber amplifiers are erbium doped fiber amplifier (EDFA). Rearrangement of the spatial assignment of the WDM channels can be easily performed by suitably arranging the connections between the outputs of optical amplifiers **240** and the input ports of the singlecore-to-multicore connector connector **250.** For example, the spatial assignment between fiber segments can be altered so as to be varied according to a cyclic core index shift or some other predetermined pattern.

Note that a long MCF can usually be made out the same preform design, so the core-to-core non-uniformity in loss and dispersion could be similar from span to span. Rotating the signals through different cores along a MCF fiber effectively reduces the negative system impact of the core-to-care non-uniformity. Note also that the core-to-core signal rotation may reduce the arrival time difference among signals that originate from the same location and terminate at the same destination. This may be beneficial for some applications.

In other embodiments according to the principles of the invention, the transmission media of the SDM transmission system may a multi-mode fiber (MMF), a few-mode fiber (FMF), or a ribbon cable made of nominally uncoupled single-mode fiber (SMF). For a MMF-based transmission system, the single-core-to-multicore connectors shown in Figs. 1 and 2 will be replaced with mode-splitters. Note also that the core-to-core rotation (mode-to-mode) for MCF (FMF) can be implemented on a "sub-span" basis, e.g., implemented when splicing short fiber segments together to form a long MCF (FMF) fiber span.

One or more embodiments described herein may help increase the overall performance of multi-core-fiber (MCF) and few-mode-fiber (FMF) based transmission systems, which is of value in future optical transmission systems that utilize MCF and FMF as the transmission media to support high transmission capacity.

In one embodiment, a space division multiplexed (SDM) transmission system comprises at least two segments of transmission media, wherein a spatial assignment of the two segments is different. In one embodiment, a space division multiplexed (SDM) transmission system comprises a first segment of transmission media having a first spatial assignment; and a second segment of transmission media having a second spatial assignment; wherein the first spatial assignment differs from the second spatial assignment.

In one embodiment, at least one respective segment of the transmission media of the SDM transmission system is a multi-core fiber (MCF), a multi-mode fiber (MMF), a few-mode fiber (FMF), or a ribbon cable made of nominally uncoupled single-mode fiber (SMF).

In one embodiment, the second spatial assignment is a rotated version of the first spatial assignment. In one embodiment, the second spatial assignment varies from the first spatial assignment according to the predetermined pattern.

In one embodiment, fiber cores of the second segment are connected to fiber cores of the first segment, a first fiber core of the first segment being connected to other than a first fiber core of the second segment. Thus, a first fiber core of the first segment is connected to a fiber of the second segment other than a corresponding first fiber core of the second segment. In one embodiment, spatial modes of the second segment are connected to spatial modes of the first segment, a first spatial mode of the first segment being connected to other than a first spatial mode of the second segment. Thus, a first spatial mode of the first segment is connected to a spatial mode of the second segment other than a corresponding first spatial mode of the second segment. In one embodiment, fibers of the second segment are connected to fibers of the first segment, a first fiber of the first segment being connected to other than a first fiber of the second segment. Thus, the optical signals traveling a first core of the first segment are moved to a core of the second segment other than a corresponding first core of the second segment.

In one embodiment, the spatial assignment is changed between the first segment and the second segment by an optical add drop multiplexer (OADM). The (OADM) may be a reconfigurable optical add drop multiplexer (ROADM). In another embodiment, the optical add drop multiplexer contains an N-input N-output optical switch.

In one embodiment, the spatial assignment is changed between the first segment and the second segment by a fiber amplifier. In another embodiment, the fiber amplifier is an N-input N-output an Erbium doped fiber amplifier.

In one embodiment, the SDM transmission system includes a transmitter and a receiver, and the first segment and the second segment comprise a link between the transmitter and the receiver. In another embodiment, the SDM transmission system includes a first optical add drop multiplexer (OADM) and a second OADM, and the first segment and the second segment comprise a link between the first OADM and the second OADM. In yet another embodiment, the SDM transmission system includes a first amplifier and a second amplifier, wherein the first segment and the second segment comprise a link between the first amplifier and the second amplifier.

In one embodiment, a method comprises obtaining optical signal on a first segment of transmission media having a first spatial assignment, and forwarding the optical signal on a second segment of transmission media having a different spatial assignment thereby altering the spatial assignment of the optical signal.

In one embodiment, the transmission media is a multi-core fiber (MCF), a multi-mode fiber (MMF), a few-mode fiber (FMF), or a ribbon cable made of nominally uncoupled single-mode fiber (SMF). In one embodiment, the transmission media is a multi-core fiber (MCF) and the forwarding comprises moving the optical signals traveling a first core of the first segment to a core other than the first core of the second segment. In another embodiment, the optical signals traveling a first core of the first segment are moved to a core of the second segment other than a corresponding first core of the second segment.

In one embodiment, the transmission media is a multi-mode fiber (MMF) or a few-mode fiber (FMF) and the forwarding comprises moving the optical signals traveling a first mode of the first segment to a mode other than the first mode of the second segment. In another embodiment, the optical signals traveling a first mode of the first segment are moved to a mode of the second segment other than a corresponding first mode of the second segment.

In one embodiment, the transmission media is a ribbon cable comprising nominally uncoupled single-mode fiber (SMF) and the forwarding comprises moving the optical signals traveling a first single mode fiber of the first segment to a single mode fiber other than the first single mode fiber of the second segment. In another embodiment, the optical signals traveling a first single mode fiber of the first segment are moved to a single mode fiber of the second segment other than a corresponding first single mode fiber of the second segment.

In one embodiment, the altering of the spatial assignment of the optical signal occurs at an optical add/drop multiplexer (OADM) site, reconfigurable add/drop multiplexer (ROADM) site, an optical amplifier site, a point in a fiber span, or a combination thereof.

In one embodiment, the obtaining and forwarding are performed at multiple locations along a transmission link, whereby spatial assignment alteration is performed at multiple locations along a transmission link. The spatial assignment alternation may be performed in a cyclic fashion or according to a predetermined pattern.

In one embodiment, the first segment and the second segment comprise a link between a transmitter and a receiver. In one embodiment, the first segment and the second segment comprise a link between two optical add drop multiplexers (OADMs). In one embodiment, the first segment and the second segment comprise a link between two amplifiers

Various provided embodiments offer a novel, different approach, a system-level approach, to addressing the performance variations among the signals traveling through the multiple cores of a MCF as compared to the existing conventional approaches based on generating better (improved) fiber design and manufacturing. As a result, the embodiments provided herein may improve system performance with essentially no additional cost.

While this invention has been described with reference to illustrative embodiments, this description is not intended to be construed in a limiting sense. Various modifications of the described embodiments, as well as other embodiments of the invention, which are apparent to persons skilled in the art to which the invention pertains are deemed to lie within the principle and scope of the invention as expressed in the following claims.

Unless explicitly stated otherwise, each numerical value and range should be interpreted as being approximate as if the word "about" or "approximately" preceded the value of the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The description and drawings merely illustrate the principles of the invention. It will thus be appreciated that those of ordinary skill in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors" and "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A space division multiplexed, SDM, transmission system (100) comprising:
at least two segments (120, 160) of multi-core optical fiber,
an optical add-drop multiplexer, OADM, (140);
a first singlecore-to-multicore connector (130) configured to connect individual cores of said first segment (120) to inputs of said optical add-drop multiplexer (140); and
a second singlecore-to-multicore connector (150) configured to connect outputs of said optical add-drop multiplexer (140) to individual cores of said second segment (160),
wherein the OADM is configured so that the spatial assignment of signals in the cores of the first segment is different from the spatial assignment of signals in the cores of the second segment such that the signals of each of the cores of the first segment are moved to another of the cores of the second segment.

2. The SDM transmission system of claim 1, wherein the at least two segments of transmission media comprise:
a first segment (120) of transmission media having a first spatial assignment; and
a second segment (220) of transmission media having a second spatial assignment; wherein the second spatial assignment is a rotated version of the first spatial assignment or varies from the first spatial assignment according to a predetermined pattern.

3. The SDM transmission system of claim 1, wherein said optical add-drop multiplexer, OADM, (140) comprises a re-configurable optical add drop multiplexer, ROADM .

4. The SDM transmission system of claim 1, wherein the cores of each segment (120, 160) include an inner optical core and outer optical cores arranged around the inner optical core.

5. A method of transmitting a space division multiplex signal comprising:
obtaining optical signals on a first segment (120) of multi-core optical fiber:
forwarding the optical signals to a second segment (160) of multi-core optical fiber
wherein the optical signals are forwarded via a first singlecore-to-multicore connector (130) that connects individual cores of said first segment (120) to inputs of an optical add-drop multiplexer, OADM, (140);
then forwarded via a second singlecore-to-multicore connector (150) that connects outputs of said optical add-drop multiplexer (140) to individual cores of said second segment (160), and
wherein the OADM is configured so that the spatial assignment of signals in the cores of the first segment is different from the spatial assignment of signals in the cores of the second segment such that the signals of each of the cores of the first segment are moved to another of the cores of the second segment.

## Patentansprüche

1. Raummultiplex-, SDM-, Übertragungssystem (100), umfassend:
mindestens zwei Segmente (120, 160) eines Mehrkern-Lichtwellenleiters,
einen optischen Add-Drop-Multiplexer, OADM, (140);
einen ersten Einkern-Mehrkern-Stecker (130), der konfiguriert ist, einzelne Kerne des besagten ersten Segments (120) mit Eingängen des besagten optischen Add-Drop-Multiplexers (140) zu verbinden; und
einen zweiten Einkern-Mehrkern-Stecker (150), der konfiguriert ist, Ausgänge des besagten optischen Add-Drop-Multiplexers (140) mit einzelnen Kernen des besagten zweiten Segments (160) zu verbinden,
wobei der OADM so konfiguriert ist, dass sich die räumliche Zuweisung von Signalen in den Kernen des ersten Segments von der räumlichen Zuweisung von Signalen in den Kernen des zweiten Segments unterscheidet, sodass die Signale jedes der Kerne des ersten Segments zu einem anderen der Kerne des zweiten Segments bewegt werden.

2. SDM-Übertragungssystem nach Anspruch 1, wobei die mindestens zwei Segmente von Übertragungsmedien umfassen:
ein erstes Segment (120) von Übertragungsmedien, das eine erste räumliche Zuweisung aufweist; und
ein zweites Segment (220) von Übertragungsmedien, das eine zweite räumliche Zuweisung aufweist;
wobei die zweite räumliche Zuweisung eine gedrehte Version der ersten räumlichen Zuweisung ist oder von der ersten räumlichen Zuweisung gemäß einem vorbestimmten Muster abweicht.

3. SDM-Übertragungssystem nach Anspruch 1, wobei der besagte optische Add-Drop-Multiplexer, OADM, (140) einen rekonfigurierbaren optischen Add-Drop-Multiplexer, ROADM, umfasst.

4. SDM-Übertragungssystem nach Anspruch 1, wobei die Kerne jedes Segments (120, 160) einen inneren optischen Kern und äußere optische Kerne einschließen, die um den inneren optischen Kern angeordnet sind.

5. Verfahren zur Übertragung eines Raummultiplex-Signals, umfassend:
Erhalten von optischen Signalen auf einem ersten Segment (120) eines Mehrkern-Lichtwellenleiters:
Weiterleiten der optischen Signale an ein zweites Segment (160) des Mehrkern-Lichtwellenleiters
wobei die optischen Signale weitergeleitet werden über einen ersten Einkern-Mehrkern-Stecker (130), der einzelne Kerne des besagten ersten Segments (120) mit Eingängen eines optischen Add-Drop-Multiplexers, OADM, (140) verbindet;
dann weitergeleitet über einen zweiten Einkern-Mehrkern-Stecker (150), der Ausgänge des besagten optischen Add-Drop-Multiplexers (140) mit einzelnen Kernen des besagten zweiten Segments (160) verbindet, und
wobei der OADM so konfiguriert ist, dass sich die räumliche Zuweisung von Signalen in den Kernen des ersten Segments von der räumlichen Zuweisung von Signalen in den Kernen des zweiten Segments unterscheidet, sodass die Signale jedes der Kerne des ersten Segments zu einem anderen der Kerne des zweiten Segments bewegt werden.

## Revendications

1. Système de transmission à multiplexage spatial, SDM, (100) comprenant :
au moins deux segments (120, 160) de fibre optique multicoeur,
un multiplexeur optique à insertion/extraction, OADM, (140) :
un premier connecteur coeur unique à multicoeur (130) configuré pour connecter des coeurs individuels dudit premier segment (120) à des entrées dudit multiplexeur optique à insertion/extraction (140) ; et
un second connecteur coeur unique à multicoeur (150) configuré pour connecter des sorties dudit multiplexeur optique à insertion/extraction (140) à des coeurs individuels dudit second segment (160),
l'OADM étant configuré de sorte que l'attribution spatiale de signaux dans les coeurs du premier segment soit différente de l'attribution spatiale de signaux dans les coeurs du second segment afin que les signaux de chacun des coeurs du premier segment soient déplacés vers un autre des coeurs du second segment.

2. Système de transmission SDM selon la revendication 1, dans lequel les au moins deux segments de support de transmission comprennent :
un premier segment (120) de support de transmission ayant une première attribution spatiale ; et
un second segment (220) de support de transmission ayant une seconde attribution spatiale ; la seconde attribution spatiale étant une version ayant subi une rotation de la première attribution spatiale ou variant par rapport à la première attribution spatiale selon un modèle prédéterminé.

3. Système de transmission SDM selon la revendication 1, dans lequel ledit multiplexeur optique à insertion/extraction, OADM, (140) comprend un multiplexeur optique à insertion/extraction reconfigurable, ROADM.

4. Système de transmission SDM selon la revendication 1, dans lequel les coeurs de chaque segment (120, 160) comprennent un coeur optique intérieur et des coeurs optiques extérieurs disposés autour du coeur optique intérieur.

5. Procédé de transmission d'un signal à multiplexage spatial comprenant les étapes suivantes :
obtenir des signaux optiques sur un premier segment (120) de fibre optique multicoeur :
transférer les signaux optiques vers un second segment (160) de la fibre optique multicoeur
les signaux optiques étant transférés par l'intermédiaire d'un premier connecteur coeur unique à multicoeur (130) qui connecte des coeurs individuels dudit premier segment (120) à des entrées d'un multiplexeur optique à insertion/extraction, OADM, (140) ;
puis transférés par l'intermédiaire d'un second connecteur coeur unique à multicoeur (150) qui connecte des sorties dudit multiplexeur optique à insertion/extraction (140) à des coeurs individuels dudit second segment (160), et
l'OADM étant configuré de sorte que l'attribution spatiale de signaux dans les coeurs du premier segment soit différente de l'attribution spatiale de signaux dans les coeurs du second segment afin que les signaux de chacun des coeurs du premier segment soient déplacés vers un autre des coeurs du second segment.
